# EUROPEAN PATENT SPECIFICATION

(11) **EP 1 899 230 B1**
(45) Date of publication and mention of the grant of the patent: **24.09.2014**
(21) Application number: 06741283.3
(22) Date of filing: 28.06.2006
(51) Int. Cl.: B65B 63/02, A01F 1/00, A01F 5/00, B09B 1/00, B09B 5/00, B30B 9/30, B30B 15/32, B65B 1/24, B65F 9/00, A01F 15/04

(54) **HANDLING COMPRESSIBLE MATERIALS**
HANDHABUNG VON KOMPRIMIERBAREN MATERIALIEN
MANUTENTION DE MATÉRIAUX COMPRESSIBLES

(30) Priority: 29.06.2005 AU 2005903423
(43) Date of publication of application: 19.03.2008
(73) Proprietor: Enviro Bale Pty Ltd, Wingfield, SA 5013 (AU)
(72) Inventor: BORRELLI, Nicola, Wingfield, South Australia 5013 (AU); DOWNS, Andrew, Melrose Park, South Australia 5039 (AU)
(74) Representative: ABG Patentes, S.L.
(86) International application number: PCT/AU2006/000903
(87) International publication number: WO 2007/000024

(56) References cited:
- FR-A5- 2 079 442
- GB-A- 969 330
- GB-A- 2 130 547
- GB-A- 2 264 451
- US-A- 3 580 166
- US-A- 3 694 992
- US-A- 3 708 953
- US-A- 3 815 323
- US-A- 5 694 742
- US-A- 5 701 723
- US-A- 5 822 957
- PATENT ABSTRACTS OF JAPAN & JP 2004 059273 A (TSUBAKIMOTO CHAIN CO ET AL.) 26 February 2004
- PATENT ABSTRACTS OF JAPAN & JP 2000 272614 A (KAMACHO SCALE CO LTD) 03 October 2000
- DATABASE WPI Week 199533, Derwent Publications Ltd., London, GB; Class Q31, AN 1995-247100, XP003008814 & DE 44 00 362 A1 (UDO ADAM MASCHINENFABRIK) 13 July 1995
- DATABASE WPI Week 198048, Derwent Publications Ltd., London, GB; Class D14, AN 1980-84888C, XP003008815 & FR 2 448 866 A1 (APROVECHAMIENTO DE LA ALFALFA Y PLANTAS JOVENES, SA) 12 September 1980
- DATABASE WPI Week 198009, Derwent Publications Ltd., London, GB; Class P12, AN 1980-B9248C, XP003008816 & FR 2 425 799 A1 (EMERY) 14 December 1979

## Description

### TECHNICAL FIELD

This invention relates to a method, arrangement and product resulting from the method and arrangement, all with respect to handling compressible materials including trash.

### BACKGROUND ART

A consistent method currently of handling compressible materials especially trash is to collect such trash and hold this in a transfer station where it is highly compressed into a charge and where the charge is then bound by encircling wire in which state, it is then transported to a remote longer term or permanent storage location.

The problem that is being addressed by this invention is in the first instance in relation to transport of trash. The term trash in this context is intended to mean waste that is of a type that is conventionally collected by city authorities and which can be usefully compressed and then held more or less effectively by encircling wire or tapes or the like for subsequent transport and storage.

However, it has been realised that the invention that has resulted can provide at least in its wider form benefits in relation to other materials. Such further materials may for instance be fibrous materials being hay or green fodder, which are traditionally compressed and baled for transport.

The problem will be expanded in relation to trash but it is not intended therefore that the invention in its broader form shall be so limited.

As cities have grown, the need to have permanent refuse or trash depositories further away from city boundaries has increased, and it has long become impractical to use a vehicle designed to collect trash from a primary source such as rubbish containers or bins, to take that rubbish to the somewhat remote permanent location.

The answer has been to have the dedicated trash collection vehicles, which conventionally include some modest compression to assist in storage capacity for each vehicle, transfer their load to a transfer station that is much closer to the city.

Thereafter, it is much more efficient to use bulk transfer to transfer the rubbish to a permanent location.

Currently, it is well known to compress trash at a transfer station to a very high degree of compression and then hold the compressed status of the material while it is encircled with wire at least around its narrower aspect, thereby forming a bale of sorts. These bales are then stacked one upon the other on the tray of a truck and transferred in this mode to the permanent depository.

A number of problems reside in this process.

The first of these is that the trash, being merely held together by encircling wire, and being of itself of a random character which may include in one part squashed vegetables, and other packages of paper goods, and other solid items, nonetheless does not separate such material from external access so that, when being transferred through suburban and country roads, the material of itself can be regarded as still offensive.

Further, wire being tightly wound around the compressible materials can have, depending on the nature of the materials, a tendency to cut into and indeed through the materials allowing for a reduction in the compression status and also allowing for more release of the materials that were hoped to be held together.

Further, the material being exposed to the atmosphere is also then exposed to both birds and rodents, which can cause significant interference with the conventional running of this process.

A further difficulty arises when more charges are created and stored waiting for location on the tray of a transport.

The materials during such periods are of course further exposed to birds and rodents and also are open to exude odours that may be of rotting flesh or vegetable matter. Further these materials can fall from any such bales and there has been needed extra covering to at least reduce this effect during transport along conventional roads.

However, a further difficulty has been discovered in that, as the trash has been very highly compressed in the first instance, it will have a tendency to relax and expand, even though it is bound by encircling wire.

The wire, however, will then be caused to take up a circular path so that a charge of trash that has been compressed to be of rectilinear proportions, will after a period when bound by wire encircling around its narrower aspect, return to being at least generally cylindrical in shape.

The problem here then is that if the bales are each reverting to a cylindrical shape, then they become unstable when stacked one upon the other at least when perhaps two or three are resting on a bottom bale.

This means that the efficiency in terms of storage becomes a problem apart from the exposure and other difficulties.

Nearest prior art, document DE-A-4400362A1 discloses a bailing method in which materials are compressed in compression chamber and then ejected from a subsequent chamber to the exterior or to a bag. The pressure is applied in the direction of the ejection of the bale. GB-A-969330 also discloses a bailing method.

Other objects and advantages of the present invention will become apparent from the following description, taken in connection with the accompanying drawings, wherein, by way of illustration and example, an embodiment of the present invention is disclosed.

For the purpose of this specification the word "comprising" means "including but not limited to", and the word 'comprises' has a corresponding meaning.

In a first instance, our proposal is to effect a bagging of a charge of compressible material subsequent to its compression and keeping it in such a bag through the transfer to a permanent site location and indeed storing the trash then permanently in its bag.

In preference such compressible material is trash of the type discussed.

A number of difficulties arise in relation to such an initial proposal.

A first of these relates to the difficulty that the charge of material will normally expand subsequent to being compressed and that any subsequent shape will be disadvantageous for subsequent stacking.

Other objects and advantages of the present invention will become apparent from the following description, taken in connection with the accompanying drawings, wherein, by way of illustration and example, an embodiment of the present invention is disclosed.

### DISCLOSURE OF THE INVENTION

In a first instance then, I propose that a bag be used to define a bale, which is shaped so that it will, when filled with a charge of material subsequent to compression, assist in maintenance of a rectilinear shape.

A further difficulty relates to an arrangement whereby a bale can be efficiently located on a repeating basis, whereby it can then receive a discharged or ejecting charge of material.

In preference this difficulty is reduced by having a holding area, which can releaseably receive an open mouth of a bale and hold this for subsequent placement over an outlet of an ejecting bale.

A number of factors and aspects relate to both a method, an arrangement to achieve the method to provide for these solutions, and any product resulting from these so that perhaps in a broadest sense, the invention can be said to reside in a method of handling compressible materials having compressing means compressing a charge of compressible material into a compressed charge in a compression area, push means then pushing the compressed charge from the compression area into a holding area, effecting a further compression stroke with said compression means compressing a further charge of compressible material into the compression area to thereby form a subsequent compressed charge, then using the push means to push the further compressed charge from the compression area into the holding area, the arrangement being such that such action will then further eject the first charge from the storage area into a bag where the bag is arranged and positioned to receive such compressed charge.

Preferably, the holding area is further arranged so as to assist in keeping the first said compressed charge to a substantially rectilinear shape.

In preference, the storage area into which the respective compressed charges are directed and stored includes opposed sides and a top and bottom defining thereby a passageway aligned to receive a compressed charge and maintain a compressed charge in a compressed state.

In preference, the storage arrangement has an outer surface adapted to receive there around and over, a bag preparatory to the bag being drawn out and around a compression charge as the compression charge is ejected from the storage area, thereby creating a bale.

In preference, there is a bag support frame adapted to receive and releaseably hold an open mouth of a bag in a compressed charge receiving state, and means to transport the bag support frame with an attached bag from a loading station to a position where the frame is positioned at or toward an inner end of the storage arrangement so that it is holding the bag with the bag enveloping the storage arrangement.

One of the difficulties associated with such a device is that a bag can, unless it is being separately supported, be a large and floppy piece of material, and this creates difficulties where the open mouth of the bag is releaseably held by a bag support frame, and the bag support frame with the attached bag is being moved into a positioning state for the bag to then receive the ejecting charge of material, thereby creating a bale.

We have discovered that there is advantage therefore in providing a blast of fluid, which in practical terms would be air, so as to in effect blow open and retain the bale shape as it is being located over the storage arrangement.

One location for an air outlet to provide this source of a location adjacent the open mouth and directed in toward the body of the bag. The arrangement preferred to be used in relation to the bag material itself is a woven plastics material which has a rectilinear end and sides emanating from the end with at an opposite end, an edge including a seam, a draw tape through the seam and adapted then to be pulled tightly and tie off the respective end.

One of the difficulties currently is the difficulty that with a bag support frame, once the bag has been released, the support frame itself then needs to be reloaded for subsequent use.

However, in preference, each bag is loaded onto its own bag support frame.

It is proposed that any bag support frame once used and having its bag released will then be relocated to a holding station where each support frame is supported by a conveyor track such that each bag support frame would be able to be then presented to a bag loading position. The bag support frame with an attached bag that has been attached to the frame at the bag loading station is thereafter caused to transfer with a bag support frame with attached bags to a storage station.

In preference there is further an arrangement so that there is a mechanism for taking the bag support frame with an attached bag from the storage station, attach to it and then carry it as it is controlled through a further process of loading such a bag support frame with the attached bag over the storage arrangement.

With respect to the compression area, the apparatus to effect such compression is known and includes in one case a first compression action, whereas an ejection action is effected subsequent to this, which action is effected in a transverse direction to the compression action.

Conventionally also, an existing apparatus provides for a closure of a compression area including a gate that is moved to be positioned across an ejection end of the compression area while a compression stroke is occurring.

Once the compression stroke is finished, the gate is withdrawn and the ejection stroke is effected.

It might be appreciated that what is being proposed in the arrangement described includes the an arrangement and method so that there is a previous charge of material residing in the storage area such that its end will act as a closure across an ejection end of the compression area.

In other words, a process is envisaged to have in its widest sense both options but in a preferred instance, it should be such that a previously existing formed charge of materials can provide a sufficient closure of an ejection end of a compression area.

The advantage here is then that the time previously necessary for withdrawing of the gate across the ejection area is then removed and this can result in a significant reduction in cycle time.

It is further to be understood in preference that any compression stroke is compression in one direction only into the compression area and as been previously stated, this is then means that the compressed materials are compressed effectively mostly in an injection direction. This is a characteristic of typical trash and other compressible materials of the type discussed.

This however, can mean that the tendency of such compressible material will be to relax only back into the direction of the previous compression so that there is not in fact a large exuding pressure from a compression area transverse to the compression direction.

This discovery assists in being able to rely upon this process where the former charge acts to contain an area of subsequent compression.

In a further form, the invention may be said to reside in an attachmentfor a baling machine that is adapted to provide a holding area such that a first compressed charge may be ejected from a compression area of the baling machine into the holding area and remain therein until a subsequent compressed charge is forced from the compression area into the holding area, such that this action will then further eject the first charge from the holding area into a bag where the bag is arranged and positioned to receive the first compressed charge.

### BRIEF DESCRIPTION OF THE DRAWINGS

For a better understanding of this invention it will now be described with respect to the preferred embodiment which shall be described herein with the assistance of drawings wherein;
Figures 1 and 2 are overall perspective views of the equipment for forming and handling compressible material bales, which is city trash in this particular instance, illustrating a general arrangement of this apparatus;
Figure 3 is a perspective view of a mechanical robot which robot is supporting the bag support frame;
Figures 4 and 5 are detailed views of a bag support frame passing over sleeve or nozzle defining the trash holding area or trash storage arrangement;
Figures 6 through 10 are schematic illustrations of the trash bale forming equipment, and the arrangement of this equipment, illustrating the successive stages in the formation of a bale;
Figure 11 is a perspective view of the trash bale; and

### DETAILED DESCRIPTION OF THE INVENTION

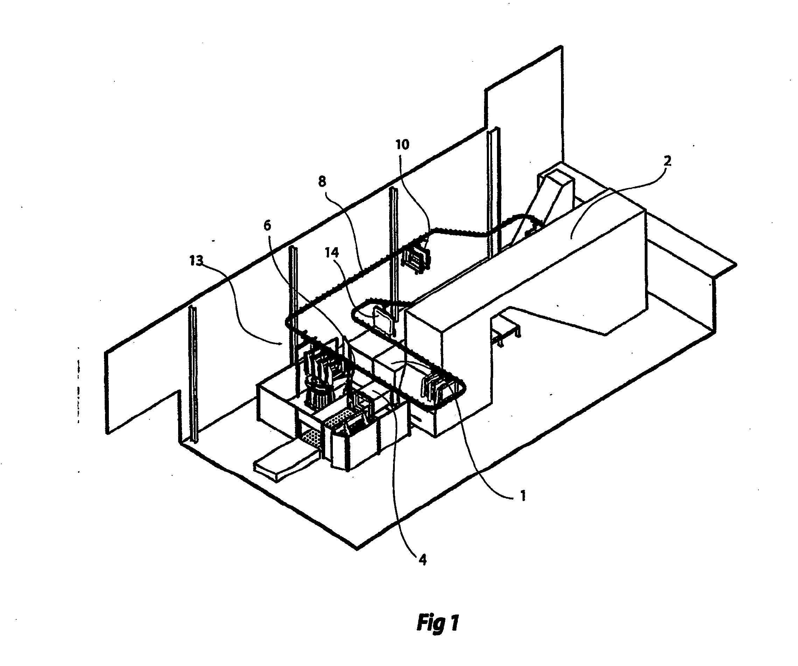

Referring now to Figure 1, which illustrates some of the equipment, and an arrangement of this equipment that is designed to facilitate the means and method of handling trash according to the present invention.

Visible in Figure 1 are a trash compressing system 1, a housing for a trash conveyor 2 that supplies trash to the trash compressing system 1, a holding area 4 for a compressed charge of trash, a programmable robot 6, and an overhead conveyor 8 supporting a number of bag support frames 10.

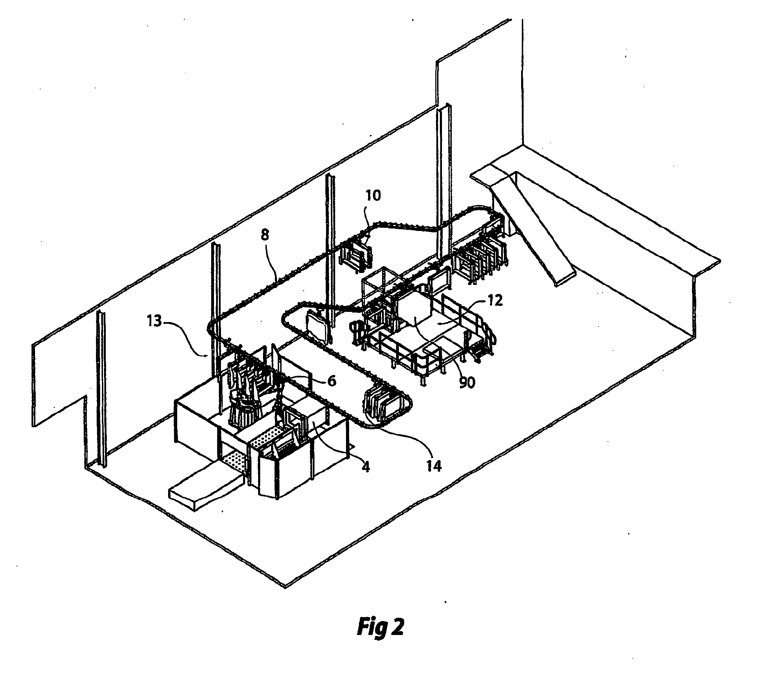

Shown in greater detail in Figure 2 are the holding area 4 for the compressed charges, the programmable robot 6, the overhead conveyor 8 supporting a number of bag support frames 10, and a bag support frame loading station 12. The trash compressing system 1 and the trash conveyor and its housing 2, have been omitted from this view in order to permit better visibility of the aforementioned components. The operation and interaction of all of this equipment is managed by a programmable control system.

The bag support frames 10 are adapted to support fresh bale bags 14, and travel on the overhead conveyor 8, this conveyor is routed from the bag loading station 12, to a support frame holding station 13; it is from this holding station 13 that the robot 6 takes the loaded bag support frames 10 as required. Once a bag support frame has been used, i.e. it no longer supports a bag 14, it is returned to the overhead conveyor 8 by the robot 6 and it is taken back to the bag loading station 12 for recharging with a fresh bag 14.

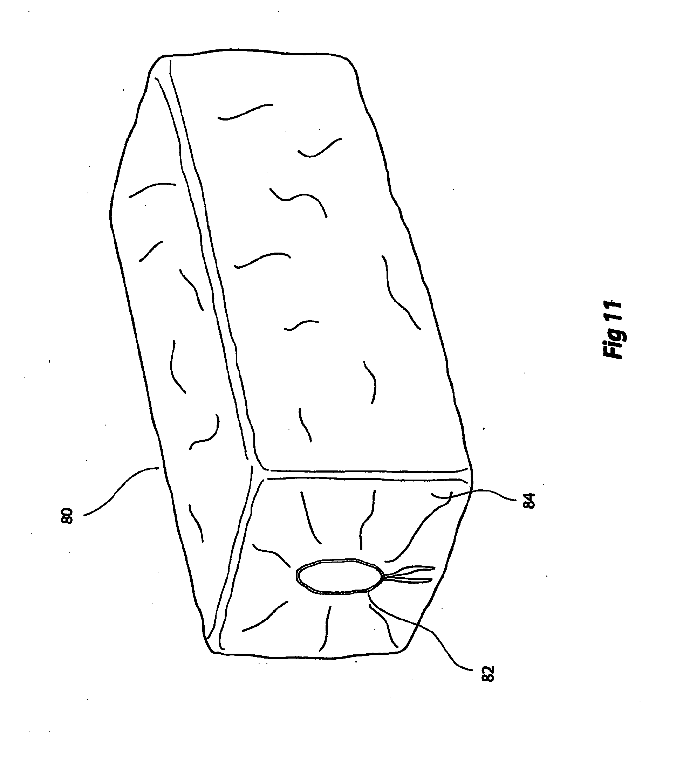

The bags 14 are made from a strong, woven plastics material. When opened out to their full extent, the bags 14 are shaped so as to define a substantially rectangular cube. One end of the bag incorporates a closable opening defined by a 'drawstring' type of arrangement (as seen in Figure 11), although a cable or tape is used in place of string due its increased strength.

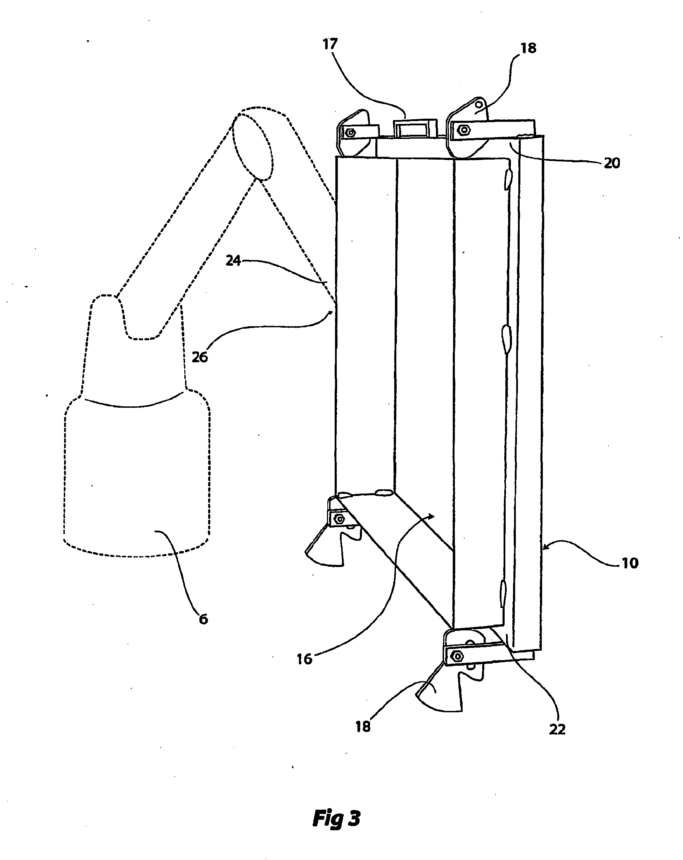

Referring now to Figure 3, the bag support frames 10 are comprised of four frame elements that define a rectangular opening 16 that is surrounded by a short sleeve or nozzle 15. The bag support frames 10 are equipped with cam-locks 18 on the top 20 and bottom 22 frame elements, which are adapted to retain the bale bag 14, once the opening in the bag has been passed over the sleeve or nozzle 15.

The robot 6 is equipped with an end effector 24 that is adapted to engage a receiving portion 26 for said end effector on the side of the bag support frame 10. The top 20 of the bag support frame is then equipped with loop means 17 that allow it to be suspended from hooks on the overhead conveyor 8 when the bag support frame 10 is not in use.

At the commencement of a baling cycle, the robot 6 removes a loaded bag support frame 10 from the support frame holding station 13 of the support frame conveyor 8, and positions the opening 16 to the frame and the bag 14 over the end of a rectilinear sleeve or nozzle 30 defining the holding area 4.

A jet of compressed air is then supplied via passageways passing through the walls of the sleeve or nozzle 30 so as to give shape to the bag 14 as the robot passes 6 it over the sleeve or nozzle 30.

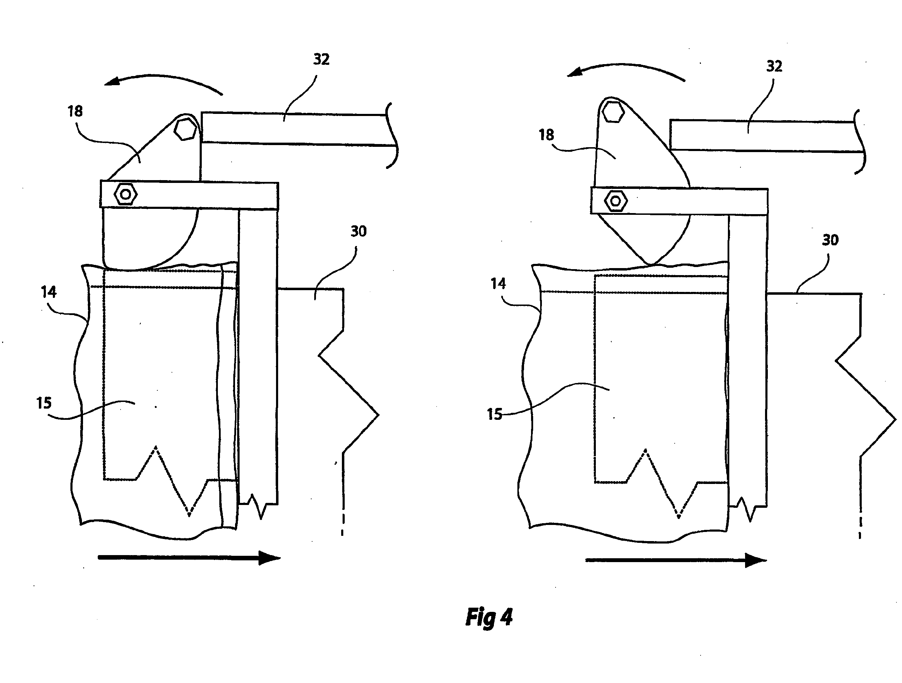

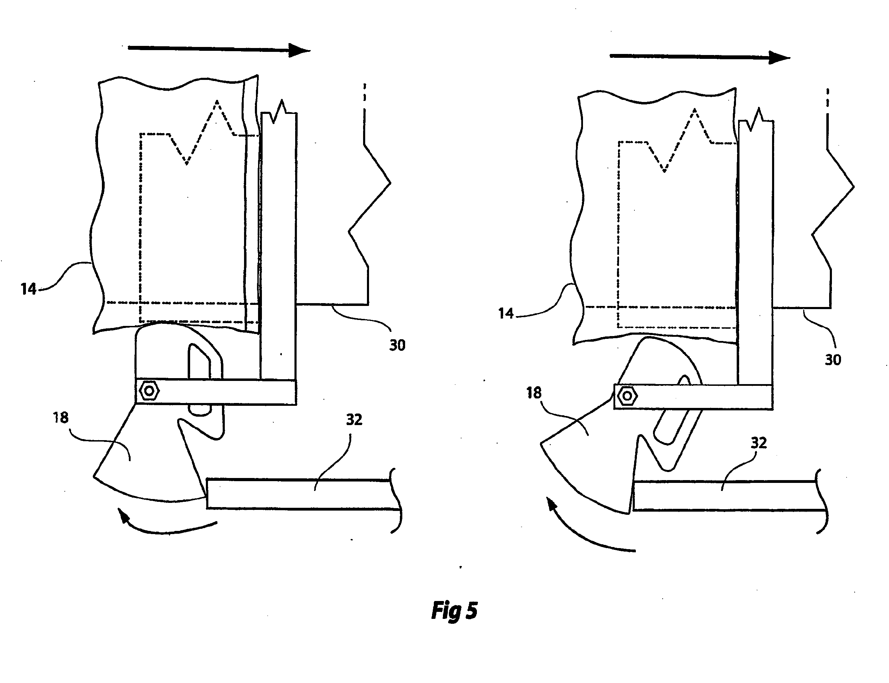

Referring now to Figures 4 and 5, the robot 6 will continue passing the bag over the sleeve or nozzle 30 until it reaches a programmed end positioned. At a point near the end of travel, there are a small pair of brackets 32 fixed to the sleeve or nozzle 30; the cam locks 18 retaining the bag to the bag support frame are urged against these brackets 32 by the movement of the robot 6 relative to the sleeve or nozzle 30, and the cam locks 18 are released. The robot 6 continues to move the support frame 10 along the sleeve or nozzle 30 until the opening in the bag 14 falls off of the short sleeve or nozzle 15 on the support frame 10 and the support frame is free of the bag. The robot 6 then withdraws the now empty bag support frame 10 from the sleeve or nozzle, leaving the bag 14 disposed upon the sleeve or nozzle 30.

The robot 6 returns the empty bale support frame 10 to the overhead conveyor 8 and hangs the empty frame 10 on the overhead conveyor 8. The end effector 24 then releases the empty bag support frame 10, and the robot moves to the support frame holding area 13 and engages a loaded bag support frame using the end effector, and is ready to begin the process again.

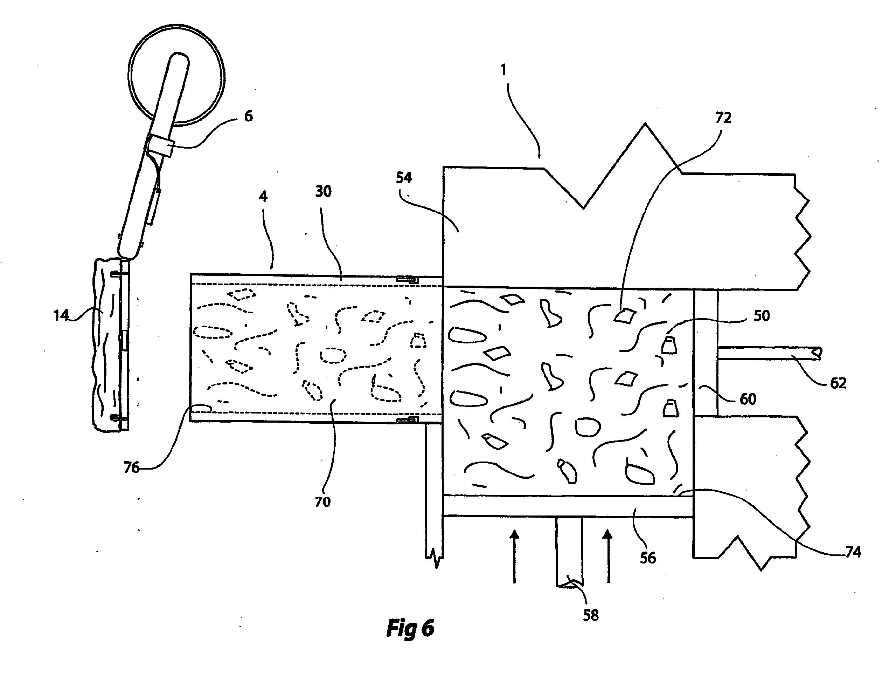

Referring now to Figures 6 through 10, the trash compression equipment defines a trash compression area 50. Trash is delivered to the compression area on the conveyor 2, at the end of the conveyor the trash falls from the conveyor and into a hopper that feeds the trash into the compression area 50.

Referring now to Figure 6, the compression area 50 is defined by a flat floor surface 52 (not visible), a first upright side wall 54 that is fixed in position relative to the floor 52, a second upright side wall 56 facing the first upright side wall 54 that is fixed to the end of a first hydraulic ram 58, and a first upright end wall 60 that is fixed to the end of a second hydraulic ram 62.

At the moment that a charge of rubbish is dropped into the compression area 50 from the conveyor, each of the hydraulic rams 58 and 62 is in a home, or retracted position.

At the conclusion of a working day or shift as the case may be, the last bale produced 70 is left in the holding area 4, i.e. in thesleeve or nozzle 30 defining the holding area. This way, the first charge compressed on the next day or shift is not compressed without some means of constraining that one end of the charge during the compression operation.

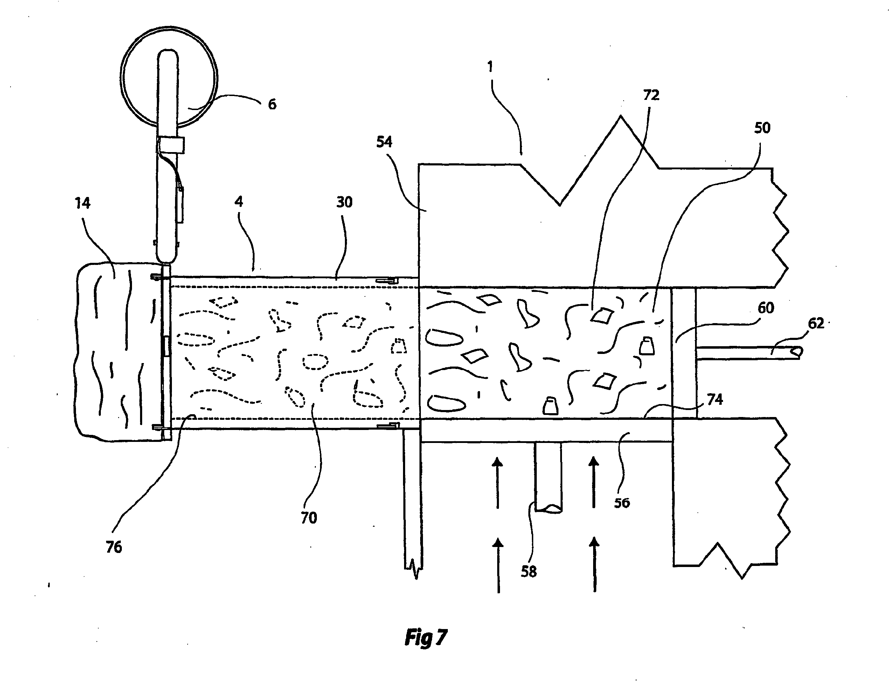

At the commencement of a new shift, the equipment is activated, and the first hydraulic ram 58 drives the second upright sidewall 56 towards the fixed upright sidewall 54 compressing the charge of trash 72. The second ram 62 remains stationary in its home position, where it supports the end wall 60 during compression. The first ram 58 continues compressing the trash until the compressing surface 74 of the first upright sidewall 54 is coplanar with the inner surface 76 of the sleeve or nozzle 30 defining the holding area 4, as shown in Figure 7; at which point the first ram 58 stops and is temporarily locked in position.

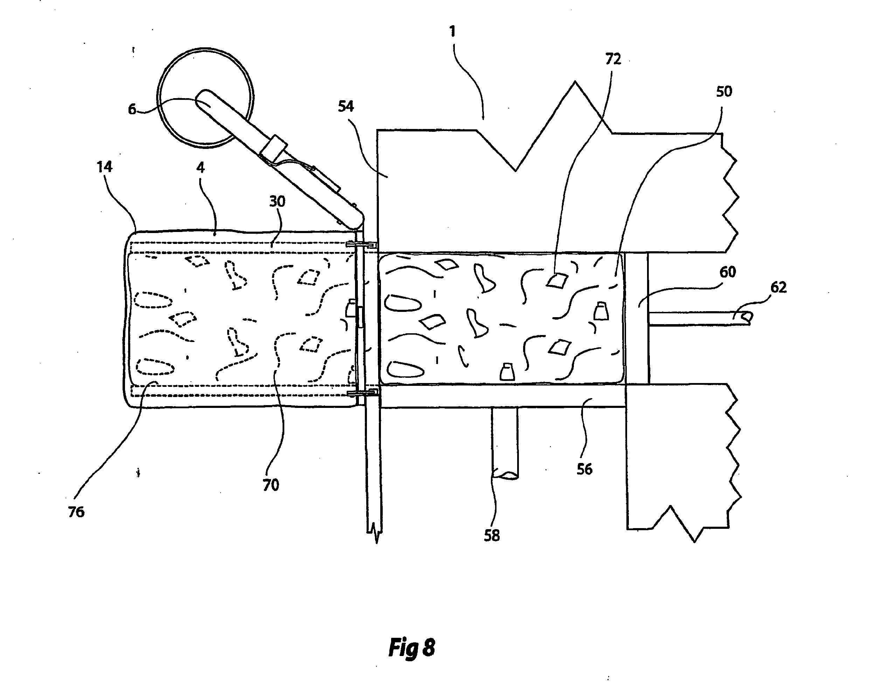

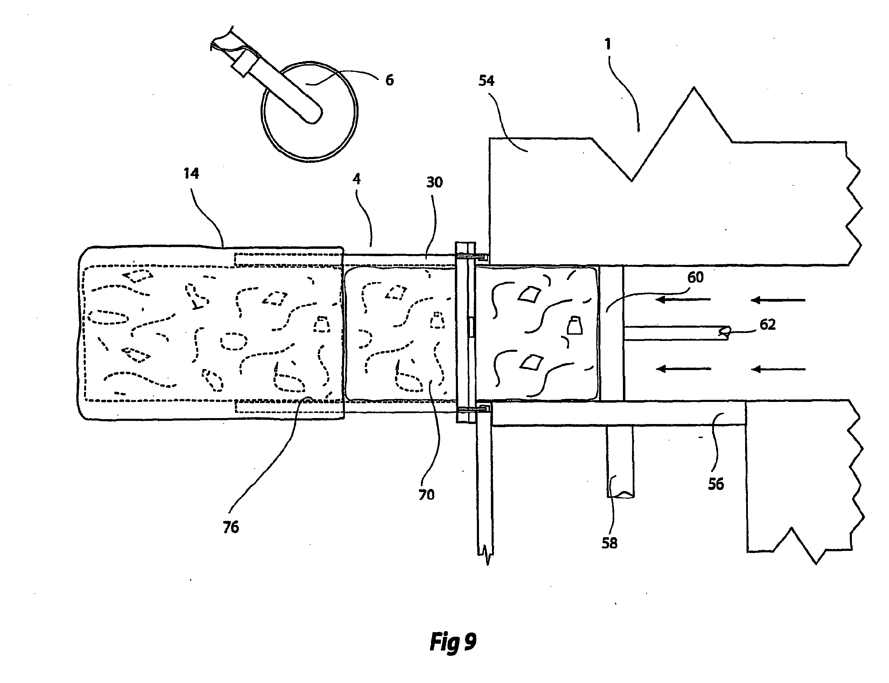

The second ram .62 then drives the end wall 60 so s to push the freshly compressed charge 72 from the compression area into the holding area 4, as shown in Figures 8 and 9, which has the effect of displacing the charge 70 that is in the sleeve or nozzle 30 defining the holding area 4 from the holding area into the bale bag 14. As the first charge 70 leaves the sleeve or nozzle 30 it picks up the end of the bale bag 14 and as this charge leaves the sleeve or nozzle it draws the bag 14 with it until both are free of the sleeve or nozzle 30.

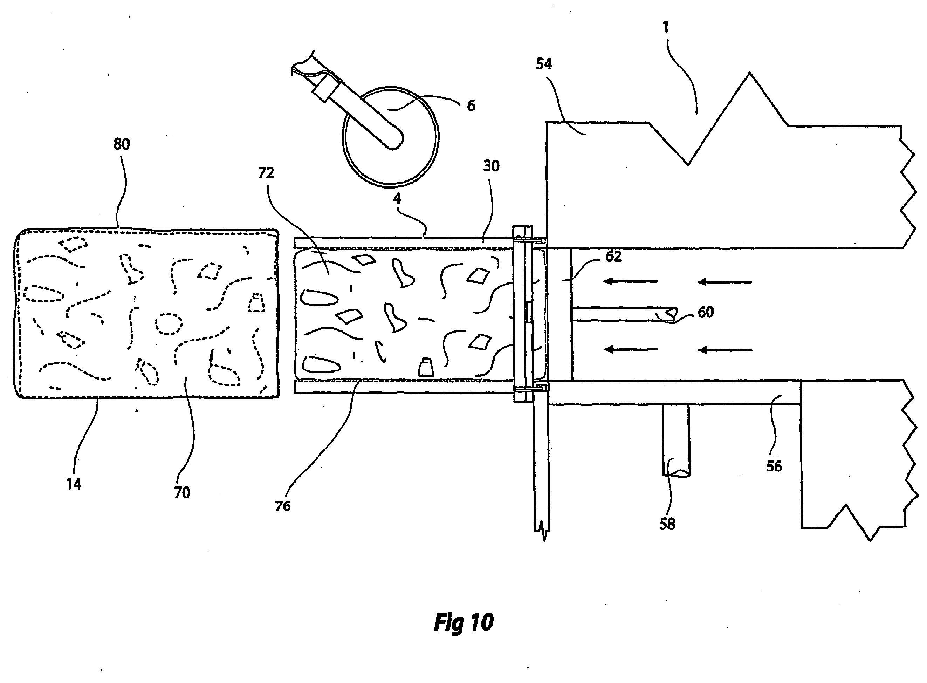

Referring now to Figure 10, once the freshly formed rectilinear bale 80 containing its charge of compressed trash is free of the sleeve or nozzle 30, the 'drawstring' style opening 82 in the end of the bag 84 can be closed and tied off by the robot 6, or indeed a person.

The rectilinear bales 80 can then be safely stacked for transporting and storage, and the fact that the bag 14 encloses the trash reduces the likelihood that the bale will loose this rectilinear shape once stacked.

The two rams 58 and 62 then return to their home positions, and the compression area 50 is ready to accept a fresh charge of trash.

When travelling on the overhead conveyor 8, a bale support frame 10 is oriented such that its open face faces in the direction of conveyor travel. As a used bag support frame approaches the loading station 12 it is rotated 90 degrees to the direction of travel of the conveyor. When the frame is in the loading position a guide block 90 is then automatically inserted into the opening in the support frame and a pair of operators, one standing to each side of the support frame 10 and guide block 90, feed a new bag 14 onto the guide block and secure it to the bale support frame using the cam-locks 18. The guide block 90 is then withdrawn and the frame rotated back so that its open face faces in the direction of conveyor travel once again.

Automating the bale forming process in the manner described reduces the number of people required to work in this otherwise dangerous and unpleasant environment. It would be understood by a person skilled in the relevant art however, that the process could be adapted such that the robot's tasks (i.e. loading of the bag on the nozzle defining the holding area) could be safely carried out by one or more people.

Bales created using this method have been found to have a density of upward of 100kg per cubic metre more than conventionally strapped bales. What is more, these bales can be produced at a higher rate, as the production rate is not dictated by the strapping machine used to create conventional bales.

Although the invention has been herein shown and described in what is conceived to be the most practical and preferred embodiment, it is recognised that departures can be made within the scope of the invention, which is not to be limited to the details described herein but is to be accorded the full scope of the appended claims.

## Claims

1. A method of handling compressible materials of trash comprising the steps of:
compressing a charge of compressible material against a fixed upright sidewall (54) into a first compressed charge in a compression area (50) by means of a first hydraulic ram (58);
pushing the first compressed charge from the compression area (50) into a rectilinear holding area (4), by means of a second ram (62), perpendicular to the first hydraulic ram (58);
allowing the first compressed charge to relax back in the direction of the compression area (50);
compressing a second charge of compressible material against a fixed upright sidewall (54) in the compression area (50) by means of a first hydraulic ram (58) to hereby form a second compressed charge
pushing the second compressed charge from the compression area (50) into the rectilinear holding area (4), by means of a second ram (62), perpendicular to the first hydraulic ram (58), thereby pushing the relaxed first charge from the rectilinear holding area (4) into a bag (14) that is arranged and positioned to receive said first compressed charge.

2. The method of claim 1 wherein the rectilinear holding area (4) has an outer surface (30) adapted to receive there around and over the bag (14),the bag being drawn out and around the first compression charge as the first compression charge is ejected from the rectilinear holding area (4), thereby creating a bale (80).

3. The method of claim 2 wherein the rectilinear holding area (4) has the same approximate dimensions as the inside of the fully opened bag (14).

## Patentansprüche

1. Verfahren zur Handhabung komprimierbarer Abfallmaterialien, umfassend die Schritte:
Komprimieren einer Charge komprimierbaren Materials an einer festen aufrechten Seitenwand (54) zu einer ersten komprimierten Charge in einem Kompressionsbereich (50) mittels eines ersten hydraulischen Druckkolbens (58);
Schieben der ersten komprimierten Charge von dem Kompressionsbereich (50) in einen geradlinigen Haltebereich (4) mittels eines zweiten Druckkolbens (62), welcher senkrecht zu dem ersten hydraulischen Druckkolben (58) angeordnet ist;
Zulassen, dass sich die erste komprimierte Charge in Richtung des Kompressionsbereichs (50) zurück entfaltet;
Komprimieren einer zweiten Charge komprimierbaren Materials an einer festen aufrechten Seitenwand (54) in dem Kompressionsbereich (50) mittels eines ersten hydraulischen Druckkolbens (58), um dadurch eine zweite komprimierte Charge zu formen;
Schieben der zweiten komprimierten Charge von dem Kompressionsbereich (50) in den geradlinigen Haltebereich (4) mittels eines zweiten Druckkolbens (62), welcher senkrecht zu dem ersten hydraulischen Druckkolben (58) angeordnet ist, wobei die entfaltete erste Charge aus dem geradlinigen Haltebereich (4) in einen Beutel (14), der derart angeordnet und positioniert ist, dass er die komprimierte Charge aufnimmt, geschoben wird.

2. Verfahren nach Anspruch 1, wobei der geradlinige Haltebereich (4) eine Außenfläche (30) aufweist, die dazu geeignet ist, den Beutel (14) um sich herum und über sich aufzunehmen, wobei der Beutel heraus und um die erste komprimierte Charge gezogen wird, wenn die erste komprimierte Charge aus dem geradlinigen Haltebereich (4) ausgeworfen wird, wodurch ein Ballen (80) erzeugt wird.

3. Verfahren nach Anspruch 2, wobei der geradlinige Haltebereich (4) annähernd die gleichen Dimensionen aufweist wie das Innere des voll geöffneten Beutels (14).

## Revendications

1. Procédé de manutention de matériaux compressibles de détritus comprenant les étapes consistant à :
compresser une charge de matériau compressible contre une paroi latérale verticale fixe (54) en une première charge compressée dans une zone de compression (50), au moyen d'un premier bélier hydraulique (58) ;
pousser la première charge compressée depuis la zone de compression (50) dans une zone d'attente rectiligne (4), au moyen d'un second bélier (62), perpendiculaire au premier bélier hydraulique (58) ;
laisser la première charge compressée se relâcher de nouveau dans la direction de la zone de compression (50) ;
compresser une seconde charge de matériau compressible contre une paroi latérale verticale fixe (54) dans la zone de compression (50) au moyen d'un premier bélier hydraulique (58) pour former ainsi une seconde charge compressée ;
pousser la seconde charge compressée depuis la zone de compression (50) dans la zone d'attente rectiligne (4) au moyen d'un second bélier (62), perpendiculaire au premier bélier hydraulique (58), en poussant ainsi la première charge relâchée de la zone d'attente rectiligne (4) dans un sac (14) qui est agencé et positionné pour recevoir ladite première charge compressée.

2. Procédé selon la revendication 1, dans lequel la zone d'attente rectiligne (4) a une surface extérieure (30) adaptée pour recevoir le sac (14) tout autour et au-dessus d'elle, le sac étant étiré et enveloppé autour de la première charge de compression lorsque ladite première charge de compression est éjectée de la zone d' attente rectiligne (4), créant ainsi une balle (80).

3. Procédé selon la revendication 2, dans lequel la zone d'attente rectiligne (4) a les mêmes dimensions approximatives que l'intérieur du sac totalement ouvert (14).
